# FASCICULE DE BREVET EUROPEEN

(11) **EP 0 592 316 B1**
(45) Date de publication et mention de la délivrance du brevet: **17.05.2000**
(21) Numéro de dépôt: 93402467.0
(22) Date de dépôt: 07.10.1993
(51) Int. Cl.: H04B 10/00, H04B 7/185, G08C 23/00

(54) **Système de transmission de données dans un satellite**
System zur Datenübertragung in einem Satelliten
System for transmitting data within a satellite

(30) Priorité: 08.10.1992 FR 9211961
(43) Date de publication de la demande: 13.04.1994
(73) Titulaire: ALCATEL, 75008 Paris (FR)
(72) Inventeur: Laine, Robert, F-31830 Plaisance du Touch (FR)
(74) Mandataire: Scheer, Luc

(56) Documents cités:
- PATENT ABSTRACTS OF JAPAN vol. 014, no. 018 (E-873) 16 Janvier 1990 & JP-A-01 261 934 (MITSUBISHI ELECTRIC CORP) 18 Octobre 1989
- IEEE TRANSACTIONS ON AEROSPACE AND ELECTRONIC SYSTEMS vol. 27, no. 3 , Mai 1991 , NEW YORK US pages 507 - 513 WAKATSUKI ET AL 'Compact equipment for on-board communications subsystem supervisory and control'
- OPTICS AND LASER TECHNOLOGY vol. 14, no. 2 , Avril 1982 , HAYWARDS HEATH GB pages 93 - 97 TAYLOR ET AL 'Fibre optics systems for space applications'
- PATENT ABSTRACTS OF JAPAN vol. 014, no. 018 (E-873) 16 Janvier 1990 & JP 01 261 933 A (MITSUBISHI ELECTRIC CORP) 13 Avril 1988

## Description

La présente invention concerne un système de transmission de données dans un satellite. Elle concerne plus particulièrement un système de transmission de signaux numériques de télécommande (TC) et de télémesure (TM) à l'intérieur d'un satellite.

A bord d'un satellite sont embarqués de nombreux équipements électroniques tels que des amplificateurs, des récepteurs, des filtres, etc... . Ces équipements, souvent redondants pour des raisons de fiabilité, appartiennent par exemple au système de transmission de signaux télévisés ou téléphoniques par satellite, ou bien aux systèmes assurant les fonctions de service à bord du satellite (gestion de bord, pilotage, alimentation, etc...).

Lors du lancement du satellite, une configuration de fonctionnement nominale est choisie, c'est-à-dire que l'on a sélectionné un certain nombre d'équipements pour les fonctions de service, un certain nombre de canaux pour la transmission de signaux téléphoniques et un certain nombre de canaux pour la transmission de signaux télévisés. Au cours de la vie du satellite, et pour des raisons commerciales notamment, il se peut que cette configuration soit modifiée. Afin de reconfigurer les équipements pour satisfaire à la demande, les stations de commande et de contrôle au sol émettent par voie hertzienne des signaux de télécommande transmis à un récepteur se trouvant à bord du satellite et les envoyant à une Unité Centrale numérique UC constituée d'une unité de traitement de ces signaux appelée CTU (Control Terminal Unit) et de plusieurs unités de transmission appelées RTU (Remote Terminal Unit) chargées de transmettre ces signaux aux différents équipements. Les signaux de TC peuvent aussi servir à choisir parmi les équipements redondants ceux qui seront effectivement actifs, notamment au niveau des systèmes assurant les fonctions de service à bord du satellite. Les signaux de TC servent donc à assurer la gestion du fonctionnement de l'ensemble des équipements électroniques embarqués à bord.

Il est par ailleurs toujours souhaitable d'effectuer des tests de contrôle, soit pour vérifier que les signaux de TC ont bien été exécutés, soit pour détecter depuis le sol des pannes éventuelles risquant de nuire au bon fonctionnement du satellite ou de perturber les signaux transmis. Les différents équipements émettent pour cela en direction de l'Unité Centrale des signaux de télémesure, transmis aux stations au sol par des émetteurs adaptés se trouvant à bord du satellite et en relation avec l'Unité Centrale. Les signaux de TM peuvent être émis soit en réponse à des signaux de TC, soit de manière systématique pour le contrôle permanent de l'état des équipements embarqués.

La transmission des signaux de TM et de TC entre l'Unité Centrale et les différents équipements est effectuée de manière classique au moyen de liaisons filaires par l'intermédiaire de câbles ; l'ensemble des liaisons filaires destinées à la transmission des signaux de télécommande et de télémesure est appelé harnais TM-TC.

On sait qu'un souci constant lors de la conception d'un satellite est de réduire autant que possible la masse embarquée, afin de diminuer le coût du lancement ainsi que le coût en carburant nécessaire au maintien du satellite en orbite, ou bien afin d'augmenter la durée de maintien en orbite d'un satellite pour une même quantité de carburant embarquée.

Or le harnais TM-TC a une masse importante (de l'ordre de quelques dizaines de kilogrammes). En effet, les liaisons filaires sont nombreuses, puisque chacune d'elles doit être bidirectionnelle entre l'équipement considéré et l'Unité Centrale, afin d'assurer la séparation d'une part des signaux de TM et de TC, et d'autre part des signaux concernant chacun des équipements.

On connaît, d'après la demande de brevet JP-1 261 934, un système de transmission de signaux de commande et de mesure à l'intérieur d'un satellite.

Ces signaux sont véhiculés entre une unité de commande et des équipements au moyen de faisceaux laser émis par des émetteurs laser à semi-conducteurs et reçus par des capteurs adaptés. Un tel système permet de diminuer la masse du harnais TM-TC.

Toutefois, ce système n'est pas satisfaisant.

En effet, la technique laser implique l'utilisation de faisceaux très directifs. Autant de faisceaux que de liaisons unidirectionnelles entre l'unité de commande et les équipements sont donc nécessaires (en pratique, il y a une liaison bidirectionnelle pour chaque équipement), de sorte qu'il faut équiper le satellite d'autant d'émetteurs/récepteurs laser que de liaisons unidirectionnelles, ce qui rend ce système coûteux et l'empêche d'être optimal au point de vue masse.

En outre, l'utilisation de faisceaux laser directifs exige un réglage précis des émetteurs/récepteurs, ce qui ajoute encore à la complexité du système, notamment lors du montage.

Le but de la présente invention est donc de réaliser un système de transmission de données à l'intérieur d'un satellite dont la masse soit plus faible que celle des systèmes de transmission de données actuellement utilisés.

La présente invention propose à cet effet un système de transmission de données à l'intérieur d'un satellite, tel que défini dans la revendication 1.

Grâce à la transmission par infrarouges non directive, on peut utiliser, au niveau de l'unité centrale, le même émetteur et le même récepteur pour plusieurs équipements. On évite donc notamment une multiplication des émetteurs/récepteurs au niveau de l'unité centrale, ce qui permet de réduire la masse du satellite et le coût du système.

L'invention permet également de simplifier la gestion du système ; en effet au lieu d'émettre un signal de télécommande spécifique à destination de chaque équipement, comme c'est le cas dans un système utilisant la transmission par faisceaux laser, on peut émettre un seul signal à destination de plusieurs équipements, chaque équipement effectuant alors, par une méthode quelconque, la sélection de la partie de ce signal commun qui lui est destinée. Le système selon l'invention permet donc également de simplifier la transmission

Par ailleurs, les émetteurs et récepteurs à infrarouges non directifs sont beaucoup plus simples à régler que les émetteurs laser directifs.

Avantageusement, tout émetteur à l'intérieur du satellite est capable de communiquer avec au moins un récepteur à l'intérieur du satellite au moyen de liaisons infrarouges directes ou par réflexions successives.

A cet effet, des miroirs optiques peuvent être disposés à l'intérieur du satellite si les surfaces internes de ce dernier ne sont pas suffisamment réfléchissantes par elles-mêmes.

Par ailleurs, les signaux numériques peuvent être constitués à la fois de signaux dits de télécommande émis par une unité centrale située à l'intérieur du satellite vers des équipements se trouvant à l'intérieur du satellite, et de signaux dits de télémesure émis par les équipements vers l'unité centrale. Le système selon l'invention peut alors être utilisé pour la commande et le contrôle par le sol des équipements embarqués à bord du satellite. Les liaisons infrarouges utilisées sont donc des liaisons bidirectionnelles. Il se peut également que les signaux numériques soient uniquement constitués de signaux de télécommande, ou uniquement de signaux de télémesure, dans les cas où l'une ou l'autre des deux fonctions précédentes n'est pas nécessaire.

De manière avantageuse, chacun des signaux de télécommande a une entête d'adressage telle que seul l'équipement auquel il est adressé est capable d'être commandé par le signal de télécommande.

Ceci permet à chaque équipement recevant le signal émis par un seul émetteur de déterminer quelle partie du signal lui est destinée, ce qui simplifie la gestion de la transmission au niveau de l'unité centrale.

Enfin, les émetteurs et récepteurs utilisés peuvent être des diodes à infrarouges.

D'autres caractéristiques et avantages de la présente invention apparaîtront dans la description suivante donnée à titre illustratif et nullement limitatif.

Dans les figures suivantes :
- la figure 1 est une représentation schématique par blocs d'un système de transmission de données selon l'invention,
- la figure 2 est une représentation détaillée par blocs de la fonction de télécommande au sein d'un équipement,
- la figure 3 est une représentation détaillée par blocs de la fonction de télémesure au sein d'un équipement.

Dans toutes ces figures, les éléments communs portent les mêmes numéros de référence.

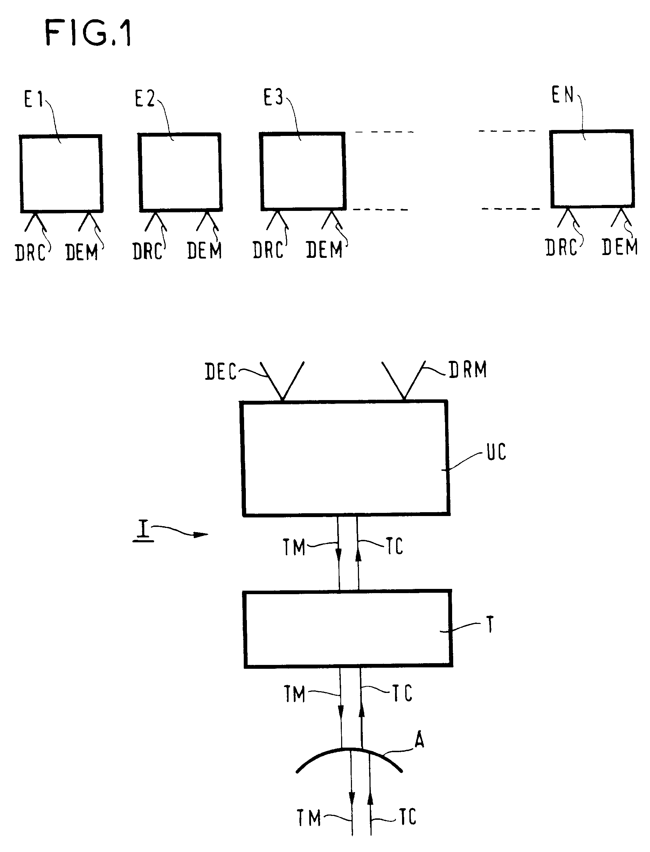

Un système I selon l'invention, représenté en figure 1, peut être utilisé d'une part pour la transmission des signaux de télécommande TC à des équipements E1, E2, ..., EN, et d'autre part pour la réception des signaux de télémesure TM émis par ces derniers. Les équipements E1 à EN sont tous disposés sur les parois intérieures d'un satellite (non représenté), et ce pour des raisons d'écoulement du flux thermique vers l'espace extérieur au satellite.

Le système I comprend une Unité Centrale, référencée UC, constituée d'une CTU et d'une ou plusieurs RTU et assurant l'interface entre les équipements E1 à EN et des émetteurs et récepteurs (non représentés) en communication avec les stations au sol, et appartenant à un système de transmission T situé à bord du satellite.

En pratique, les stations au sol émettent des signaux de télécommande TC par voie hertzienne. Ces signaux sont reçus par une (ou plusieurs) antenne A située sur le satellite, transmis ensuite aux récepteurs du système T qui les envoie enfin à l'Unité Centrale UC.

L'Unité Centrale UC a pour fonction de mettre les signaux de TC sous forme numérique (si ces derniers ne le sont pas déjà) puis de les coder, et enfin de les transformer en signaux optiques afin de les diffuser en direction des équipements E1 à EN au moyen d'une ou de plusieurs diodes émettrices à infrarouges DEC (en nombre inférieur à celui des équipements E1 à EN) situées de préférence sur les parois extérieures de l'Unité Centrale UC de manière à réduire au maximum les câblages nécessaires entre elles et l'Unité Centrale UC.

Les diodes DEC sont réparties de sorte que les équipements E1 à EN à commander, munis à cet effet chacun d'une diode réceptrice de signaux infrarouges DRC, puissent recevoir les signaux de TC émis. Tout comme les diodes DEC, les diodes DRC se trouvent sur les parois extérieures des équipements associés, afin de réduire les câblages nécessaires.

Les diodes DRC de la plupart de ces équipements se trouvent dans le champ d'émission de la ou des diodes DEC et reçoivent donc directement les signaux de TC. En revanche, certains équipements sont cachés par d'autres ou bien situés hors de portée directe des faisceaux d'émission des DEC ; ils reçoivent alors les signaux de TC par réflexions successives sur les parois intérieures du satellite ou, si ces dernières ne sont pas suffisamment réfléchissantes, sur des miroirs optiques (non représentés) placés de manière adaptée à l'intérieur du satellite.

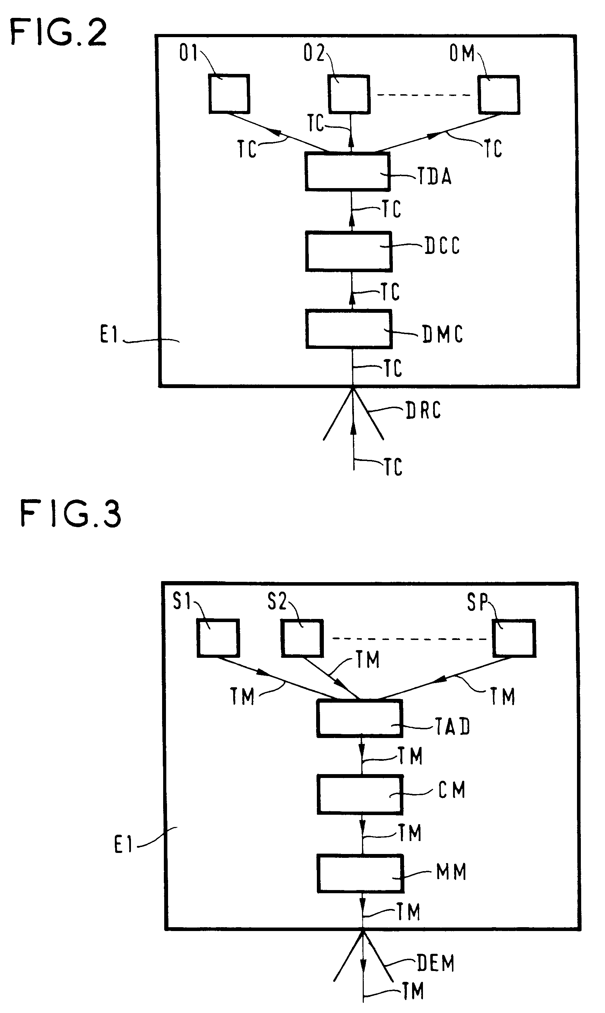

Les signaux optiques de TC sont alors transformés en signaux électriques par un démodulateur DMC (voir figure 2), puis décodés au moyen d'un décodeur DCC et transformés si besoin en signaux analogiques par un transformateur digital-analogique TDA pour être enfin exécutés par les organes concernés O1, O2, ..., OM des équipements auxquels ils sont destinés.

Avantageusement, les diodes d'émission à infrarouges sont choisies de sorte qu'elles émettent des faisceaux larges et donc très peu directifs. Ainsi, plusieurs DRC sont en général éclairées par un même faisceau. Les signaux de TC mis en forme par l'Unité Centrale UC comportent donc une entête d'adressage pour chaque équipement, cette entête pouvant être décodée par tous les équipements mais comprise par le seul équipement auquel elle est destinée, qui décode alors le message correspondant.

Pour ce qui est de la télémesure, chaque équipement est doté d'une diode émettrice de signaux infrarouges DEM, disposées sur les parois extérieures des équipements associés pour réduire les câblages nécessaires.

Les signaux analogiques de télémesure, recueillis au sein de chaque équipement par des senseurs S1, S2, ..., SP (voir figure 3), sont transformés, toujours au sein des équipements, en signaux numériques à l'aide d'un transformateur analogique-digital TAD, puis codés par un codeur CM et enfin transformés en signaux optiques par un modulateur électro-optique MM. Si les signaux de télémesure sont numérisés à l'origine, ils sont bien évidemment envoyés directement au codeur CM.

Les diodes DEM envoient alors les signaux de TM en direction d'une ou de plusieurs diodes réceptrices à infrarouges DRM (en nombre inférieur à celui des équipements E1 à EN), réparties de préférence sur les parois extérieures de l'Unité Centrale UC. De même qu'en TC, les signaux peuvent être reçus par l'Unité Centrale UC soit directement, soit après réflexions successives sur les parois internes du satellite ou au moyen de miroirs optiques placés en des endroits adaptés à l'intérieur du satellite.

L'Unité Centrale UC assure enfin la mise en forme et le regroupement (packaging) adéquats des signaux de TM reçus pour les transmettre au système T qui les envoie alors par voie hertzienne aux stations de commande et de contrôle au sol.

La transmission par infrarouges permet non seulement d'alléger le harnais TM-TC, mais aussi d'exploiter les phénomènes de réflexion des signaux transmis, soit par l'intermédiaire de miroirs optiques disposés en des endroits spécifiques du satellite de manière à assurer les réflexions recherchées, soit au moyen de surfaces réfléchissantes se trouvant à l'intérieur du satellite.

Le retour à la masse du réseau d'alimentation à l'intérieur du satellite, peut être effectué soit directement par la structure du satellite si celle-ci est conductrice, soit au moyen d'un conducteur de masse commun.

Plusieurs méthodes de télémesure peuvent être utilisées. Selon une première méthode, les signaux de télémesure sont émis séquentiellement par les équipements. Chaque équipement émet donc tour à tour un signal de TM, et il n'y a alors pas de confusion possible au niveau de la réception par l'Unité Centrale UC.

Selon une deuxième méthode, simplifiant encore la gestion du système, grâce à l'utilisation de liaisons infrarouges non ou peu directives, tous les équipements émettent simultanément des signaux de TM. Dans ce cas, les signaux de TM sont conçus pour ne pas se combiner en donnant un signal significatif pour l'Unité Centrale UC : on dit alors que les signaux de TM sont codés orthogonalement.

Les avantages de l'invention sont très nombreux.

Dans un premier temps, elle permet de diminuer la masse du satellite et de réaliser ainsi une économie très sensible dans les coûts de lancement et de maintien en orbite du satellite, ou bien prolonger sensiblement la durée de vie de ce dernier.

Par ailleurs, elle simplifie la gestion des signaux de TM et TC.

En outre, les tests de validation nécessaires avant le lancement du satellite pour qualifier les équipements destinés à être embarqués peuvent être effectués beaucoup plus simplement qu'avant en utilisant la commande non directive par infrarouge de ces équipements directement à partir du banc d'essais. En effet, l'émetteur (ou les émetteurs) porté par l'Unité Centrale peut être disposé sur le banc d'essais et orienté sans précision fine vers les équipements avant intégration. Avec un système à faisceaux laser directifs, une telle mise en oeuvre n'est pas possible.

Le système de transmission par infrarouges selon l'invention utilisé pour la télécommande et la télémesure répond aux exigences requises pour les systèmes de télécommande et de télémesure :
- il présente un taux d'erreur aussi faible que celui des systèmes classiques utilisant la transmission par voie filaire, puisque les erreurs sont détectées et corrigées au moyen d'un codage de canal particulier et que le codage des signaux effectué n'a pas de raison de changer par rapport au codage effectué dans l'art antérieur,
- il n'a pas de mode de panne commun (on appelle mode de panne commun une panne qui se propage d'un élément du système à un autre) puisqu'il n'existe pas de liaison physique entre l'Unité Centrale et les équipements,
- il est capable d'effectuer une transmission bidirectionnelle (UC -> équipements, équipements -> UC).

Certains problèmes comme la saturation des émetteurs et récepteurs à infrarouges par le flux lumineux provenant du soleil et s'introduisant dans le satellite sont évités en dotant ces derniers de filtres adaptés.

Les temps de propagation des signaux à l'intérieur du satellite sont tous du même ordre de grandeur : quel que soit le chemin parcouru par un signal entre l'émetteur et le récepteur, sa fréquence reste la même. Ceci est dû au fait que le satellite a des dimensions relativement petites.

Enfin, il faudra prendre garde à sélectionner des émetteurs et récepteurs à infrarouges qui ne sont pas sensibles aux rayonnements ionisants que l'on peut rencontrer dans l'espace. De telles perturbations risqueraient en effet d'obscurcir leur fenêtre de passage ou de les dégrader.

On entend, de manière générale par liaison infrarouge non directive une liaison peu ou pas directive.

En outre, l'invention ne se limite pas au système de télécommande et de télémesure particulièrement décrit, et peut être adaptée à tout système de transmission de données à l'intérieur d'un satellite, les données ayant une utilisation et une forme quelconques.

Par ailleurs, on peut utiliser autant de composants redondants qu'il est nécessaire pour garantir la fiabilité du système.

De plus, les diodes à infrarouges peuvent être remplacées par d'autres composants optiques capables de remplir les mêmes fonctions d'émission et de réception non directives.

Enfin, on pourra remplacer tout moyen par un moyen équivalent sans sortir du cadre de l'invention.

## Revendications

1. Système de transmission de données à l'intérieur d'un satellite, comprenant des émetteurs et des récepteurs de signaux numériques contenant lesdites données, caractérisé en ce qu'au moins un desdits émetteurs (DEC, DEM) et/ou récepteurs (DRC, DRM) est relié à une pluralité respectivement de récepteurs et/ou d'émetteurs par des liaisons infrarouges non directives.

2. Système selon la revendication 1 caractérisé en ce que tout émetteur à l'intérieur du satellite est capable de communiquer avec au moins un récepteur à l'intérieur du satellite au moyen de liaisons infrarouges directes ou par réflexions successives.

3. Système selon la revendication 2 caractérisé en ce que des miroirs optiques sont disposés à l'intérieur du satellite pour permettre la transmission desdits signaux par réflexions successives.

4. Système selon l'une des revendications 1 à 3 caractérisé en ce que lesdits signaux numériques sont constitués à la fois de signaux dits de télécommande émis par une unité centrale (UC) située à l'intérieur du satellite vers des équipements se trouvant à l'intérieur du satellite, et de signaux dits de télémesure émis par lesdits équipements vers ladite unité centrale.

5. Système selon la revendications 4 caractérisé en ce que chacun desdits signaux de télécommande a une entête d'adressage telle que seul ledit équipement auquel il est adressé est capable d'être commandé par ledit signal de télécommande.

6. Système selon l'une des revendications 1 à 5 caractérisé en ce que lesdits émetteurs et lesdits récepteurs sont des diodes à infrarouges.

## Claims

1. System for transmitting data inside a satellite comprising senders and receivers of digital signals containing said data characterized in that at least one of said senders (DEC, DEM) and/or receivers (DRC, DRM) is connected to a plurality of respective receivers and/or senders by non-directional infra-red links.

2. System according to claim 1 characterized in that every sender inside the satellite is capable of communicating with at least one receiver inside the satellite by means of direct infra-red links or by successive reflections.

3. System according to claim 2 characterized in that optical mirrors are disposed inside the satellite to enable transmission of said signals by successive reflections.

4. System according to any one of claims 1 to 3 characterized in that said digital signals comprise both telecontrol signals sent by a central unit (CU) inside the satellite to equipment units inside the satellite and telemetry signals sent by said equipment units to said central unit.

5. System according to claim 4 characterized in that each of said telecontrol signals has an addressing header such that only said equipment unit to which it is addressed can be controlled by said telecontrol signal.

6. System according to any one of claims 1 to 5, characterized in that said senders and said receivers are infra-red diodes.

## Patentansprüche

1. System zur Datenübertragung innerhalb eines Satelliten, mit Sendern und Empfängern für digitale Signale, die die Daten enthalten, dadurch gekennzeichnet, daß wenigstens einer der Sender (DEC, DEM) und/oder Empfänger (DRC, DRM) jeweils mit einer Mehrzahl von Sendern und/oder Empfängern über ungerichtete Infrarotverbindungen verbunden ist.

2. System nach Anspruch 1, dadurch gekennzeichnet, daß jeder Sender innerhalb des Satelliten in der Lage ist, mit wenigstens einem Empfänger innerhalb des Satelliten über direkte Infrarotverbindungen oder über sukzessive Reflexionen zu kommunizieren.

3. System nach Anspruch 2, dadurch gekennzeichnet, daß optische Spiegel innerhalb des Satelliten angeordnet sind, um die Übertragung der Signale durch sukzessive Reflexionen zu ermöglichen.

4. System nach einem der Ansprüche 1 bis 3, dadurch gekennzeichnet, daß die digitalen Signale sowohl durch von einer innerhalb des Satelliten angeordneten Zentraleinheit (UC) zu innerhalb des Satelliten befindlichen Geräten gesendete sogenannten Fernsteuersignale als auch durch von den Geräten zu der Zentraleinheit gesendete sogenannte Fernmeßsignale gebildet sind.

5. System nach Anspruch 4, dadurch gekennzeichnet, daß jedes der Fernsteuersignale einen Adressheader hat, so daß nur das Gerät, für das es bestimmt ist, in der Lage ist, durch das Fernsteuersignal gesteuert zu werden.

6. System nach einem der Ansprüche 1 bis 5, dadurch gekennzeichnet, daß die Sender und Empfänger Infrarot-Dioden sind.
